# EUROPEAN PATENT APPLICATION

(11) **EP 3 528 035 A1**
(43) Date of publication of application: **21.08.2019**
(21) Application number: 18157546.5
(22) Date of filing: 20.02.2018
(51) Int. Cl.: G02C 1/02, G02C 1/04

(54) **SPECTACLE FRAME, SPECTACLES, AND METHOD FOR MANUFACTURING SPECTACLES**

(71) Applicant: Hyoi, Isao, Fuku-shi, Fukui 910-0853 (JP); Nakano, Hirofumi, Fukui-shi, Fukui 918-8236 (JP)
(72) Inventor: Hyoi, Isao, Fukui-shi, Fukui, 910-0853 (JP)
(74) Representative: Vossius & Partner Patentanwälte Rechtsanwälte mbB

(57) **Abstract**

A spectacle frame is provided. The sectacle frame includes an chassis; and a support part for supporting a lens. The support part extends downward from the chassis. The support part has a first penetration hole penetrating the support part. The first penetration hole is provided near a base end of the support part. The support part has a second penetration hole penetrating the support part. The second penetration hole is provided near a distal end of the support part. A holder thread is to be inserted through the first penetration hole and the second penetration hole, engaged in a groove provided around the lens between the first penetration hole and the second penetration hole, so as to hold the lens under the chassis.

## Description

### BACKGROUND OF INVENTION

### Technical Field

The present invention relates to a spectacle frame.

### Background Art

Various types of spectacle frames are known.

For example, half-rim, or nylol, spectacle frames are disclosed in Japanese Patent Application Publications Nos. 9-258141 and 2001-194631, and others. As shown in FIG. 1, the half-rim frame includes temple parts 121, hinge parts 122, end pieces 124, rims 131, and a bridge part 132. Each of the rims has an arc shape, and covers an upper edge of a lens 115. A holder thread 116 is fitted in a groove dented from a peripheral side face of the lens 115, and thereby fixes the lens 115. The holder thread 116 is a nylon yarn or other high tensile string, and is fixed with tension to the rim 131.

As other examples, rimless spectacles are disclosed in Japanese Patent Application Publications Nos. 2002-244083 and 2006-58717, and others. The rimless spectacles have no rims or holder thread. Instead, the lens are directly fixed to the end pieces and the bridge part, by making holes through the lens and inserting screws or other fixture means through the holes.

### SUMMARY OF INVENTION

### Technical Problem

In the known half-rim spectacles, the rims cover the upper edges of the lens. This results in some cases where lens with different shapes or sizes can not be mounted on the frame.

The known rimless spectacles can handle lens having various shapes and sizes. However, a stress is concentrated to the hole through which the fixing means are inserted. This makes the lens fragile.

The present invention aims to solve such problems.

### Solution to Problem

A spectacle frame according to the present invention includes an chassis; and a support part for supporting a lens. The support part extends downward from the chassis. The support part has a first penetration hole penetrating the support part. The first penetration hole is provided near a base end of the support part. The support part has a second penetration hole penetrating the support part. The second penetration hole is provided near a distal end of the support part. A holder thread is to be inserted through the first penetration hole and the second penetration hole, engaged in a groove provided around the lens between the first penetration hole and the second penetration hole, so as to hold the lens under the chassis.

The support part may be a separate component from the chassis, and fixed to the chassis. The chassis may have a third penetration hole penetrating the chassis. The holder thread may be inserted through the third penetration hole, so as to fix the support part to the chassis.

The support part may be deformable to adjust a position of the lens.

The chassis may have an engagement part for engaging the holder thread to prevent displacement of the lens. The engagement part may further engage a lens engagement part provided at an upper edge of the lens.

The support part may further extend at least laterally along a periphery of the lens. The support part may be deformable to match the periphery of the lens.

A part of the holder thread may run on a contact face of the support part to come into contact with the lens, and engage a second lens engagement part provided at a side edge of the lens, so as to prevent displacement of the lens.

The chassis may have a brow part laterally extending and to be located over the lens, and a bridge part laterally extending from an end of the brow part. The support part may extend downward from a vincity of a boundary between the brow part and the bridge part.

Spectacles according to the present invention includes the spectacle frame; the lens; and the holder thread.

A method for manufacturing spectacles according to the present invention includes the following steps.

A spectacle frame having an chassis, and a support part extending downward from the chassis is provided. The support part have a first penetration hole penetrating the support part. The first penetration hole is provided near a base end ot the support part. The support part have a second penetration hole penetrating the support part. The second penetration hole is provided near a distal end ot the support part.

A holder thread is inserted through the first penetration hole and the second penetration hole. The holder thread is engaged in a groove provided around a lens between the first penetration hole and the second penetration hole, so as to hold the lens under the chassis.

The support part may be a separate component from the chassis. The chassis may have a third penetration hole penetrating the chassis. The holder thread may be inserted through the third penetration hole, so as to fix the support part to the chassis. One may be selected from a plurality of the support parts, so as to adjust a position of the lens.

The support part may be deformed, so as to adjust a position of the lens.

### BRIEF DESCRIPTION OF DRAWINGS

FIG. 1 is a partial perspective view illustrating known examplary half-rim spectacles;
FIG. 2 is a partial perspective view illustarating examplary spectacles;
FIG. 3 is a perspective view illustrating an examplary lens;
FIG. 4 is a partial perspective view illustrating an examplary spectacle frame;
FIG. 5 is a partial perspective view illustrating an examplary chassis;
FIG. 6 is a perspective view illustrating an examplary separate component;
FIG. 7 is a perspective view illustrating another examplary separate component;
FIGS. 8 and 9 are schematic views illustrating examplary spectacles;
FIG. 10 is partial perspective view illustrating an examplary spectacle frame.
FIG. 11 is a partial perspective view illustarating examplary spectacles;
FIG. 12 is a partial perspective view illustrating an examplary spectacle frame;
FIG. 13 is a partial perspective view illustarating examplary spectacles;
FIGS. 14 and 15 are partial perspective views illustrating an examplary spectacle frame;
FIG. 16 is a partial perspective view illustarating examplary spectacles;
FIGS. 17 and 18 are partial perspective views illustrating an examplary spectacle frame;
FIG. 19 is a partial enlarged perspective view illustrating an examplary spectacle frame;
FIG. 20 is a perspective view illustrating an examplary lens;
FIG. 21 is a partial perspective view illustarating examplary spectacles; and
FIGS. 22 to 24 are partial perspective views illustrating an examplary spectacle frame;

### EMBODIMENTS

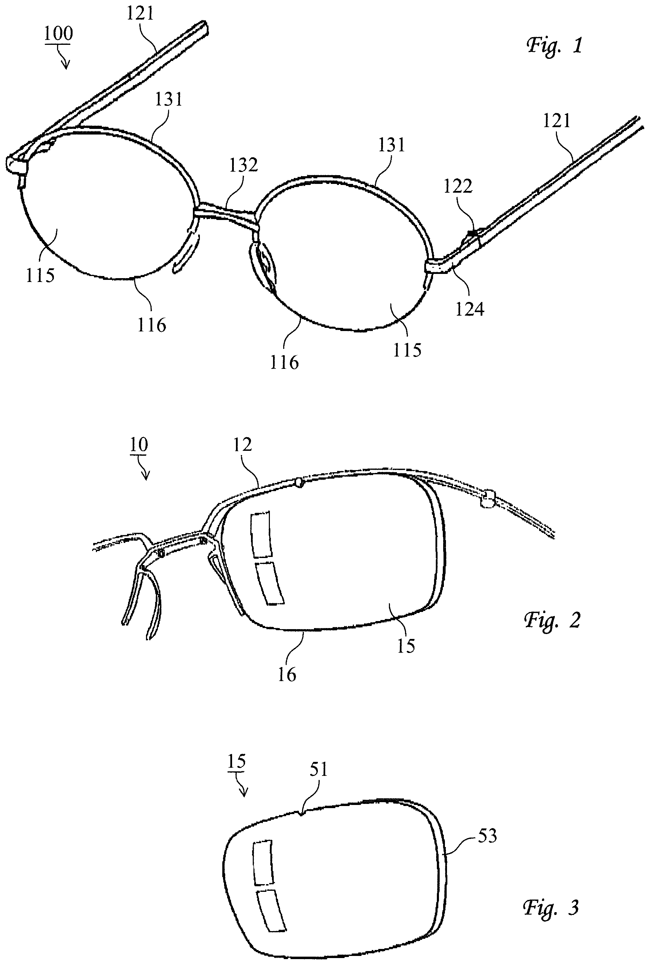

As shown in FIG. 2, spectacles, or glasses, 10 may include a spectacle frame 12, may include a lens 15, and may include a holder thread 16. The lens 15 may be fixed to the spectacle frame 12 by tensile force of the holder thread 16. Similar structures may also exist at a right side, which is not shown.

As shown in FIG. 3, the lens 15 may include a groove 53. The groove 53 may be provided around the lens 15, and may be dented from a peripheral side face of the lens 15. The holder thread 16 may be fitted in the groove 53. The lens 15 may include a lens engagement part 51. The lens engagement part 51 may be a cylindrical recess, and may extend in a anteroposterior direction. The lens engagement part 51 may be provided at an upper edge of the lens 15, and may be dented from an upper part of the peripheral side face of the lens 15. The lens engagement part 51 may be formed prior to assembly of the spectacles 10, or may be formed during the assembly.

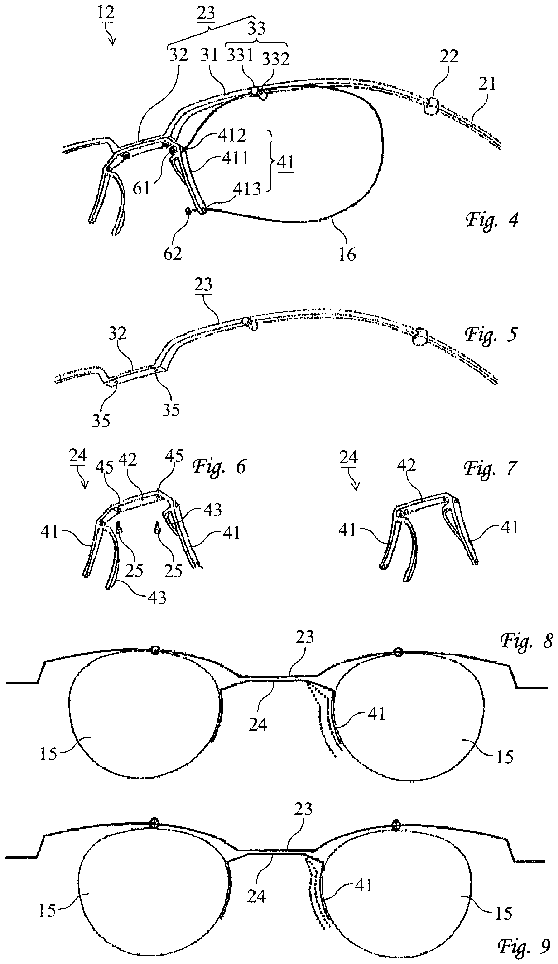

As shown in FIG. 4, the spectacle frame 12 may include a temple part 21, may include a hinge part 22, may include a chassis 23, and may include a support part 41. Similar structures may also exist at a right side, which is not shown.

The chassis, or bar frame, 23 may include a brow part 31. The brow part, or frame, 31 may extend laterally, and may be disposed at a position to be over the lens 15 after assembly of the spectacles 10, that is, at a position to be over a front of an eye of a user when the spectacles 10 are worn. The brow part 31 may be curved smoothly.

The chassis 23 may include a bridge part 32. The bridge part, or central bridge part, 32 may extend laterally from an end of the brow part 31, and may connect between the brow part 31 and another brow part at the opposite side. The bridge part 32 may be disposed at a position over a nose of the user when the spectacles 10 are worn. The bridge part 32 may be straight.

The chassis 23 may include an engagement part 33. The engagement part, or guide, 33 may be disposed and fixed under the brow part 31. The engagement part 33 may include a cylinder part 331. The cylinder part 331 may have a cylindrical shape extending along the anteroposterior direction. The lens engagement part 51 may engage the engagement part 33, and may fit with the cylinder part 331. This may prevent displacement of the lens 51. The engagement part 33 may include a groove 332. The groove 332 may be provided in a side face of the cylinder part 331, and may be formed over one round in a circumferential direction.

The support part, or contact piece, 41 may extend downward from the chassis 23, and may extend from a vincity of a boundary between the brow part 31 and the bridge part 32. The support part 41 may be disposed at a position to be beside the lens 15, and may support the lens 15.

The support part 41 may include a contact face 411. The contact face 411 may be located at an outer side, that is, a side opposite the nose of the user when the spectacles 10 is worn, of the support part 41, and may come into contact with the lens 15. The support part 41 may be configured to make the contact face 41 to abut a lower half of an inner lateral part of the peripheral side face of the lens 15. The support part 41 may include a groove. The groove may be dented from the contact face 411, and may engage the holder thread 16.

The support part 41 may include a penetration hole 412. The penetration hole, or small hole, 412 may penetrate the support part 41 from the contact face 411 to the opposite face, and may be disposed near a base end, that is, an end at a side connecting to the chassis 23, of the support part 41.

The support part 41 may include a penetration hole 413. The penetration hole, or small hole, 413 may penetrate the support part 41 from the contact face 411 to the opposite face, and may be disposed near a distal end, that is, the other end than the base end, of the support part 41.

The holder thread 16 may be inserted through the penetration hole 412. A ball 61 may be formed at one end of the holder thread 16 by melting or other means. The ball 61 may be too big to pass through the penetration hole 412. The holder thread 16 may be inserted through the penetration hole 413. A ball 62 may be formed at the other end of the holder thread 16 by melting or other means. The ball 62 may be too big to pass through the penetration hole 413.

The holder thread 16 may have a length so as to stretch a little when the lens 15 is fitted between the support part 41 and the holder thread 16. This may create a tensile force to hold, or bind, the lens 15. A middle part of the holder thread 16 may be engaged to the engage part 33, and may be hung in the groove 332. This may prevent displacement of the lens 15.

For example, the holder thread 16 is cut to an appropriate length, and the ball 61 is formed at its one end. Next, the other end of the holder thread 16 is inserted through the penetration hole 412 from the opposite face to the contact face 411, and then inserted through the penetration hole 413 from the contact face 411 to the opposite face. After the holder thread 16 is cut again if required, the ball 62 is formed. The holder thread 16 is engaged with the engagement part 33, and the lens 15 is fitted between the support part 41 and the holder thread 16. The sequence of the insertion may be inverted.

Almost of the periphery of the lens 15 is held with the holder thread 16. This allows to mount various lens 15 having different shapes.

As shown in FIG. 5, the chassis 23 may include one or more penetration holes 35. The penetration holes 35 may penetrate the bridge part 32 in a substantially virtical direction, and may be disposed near both ends of the bridge part 32. The penetration holes 35 may have a cylindrical shape, and may be threaded on their inner face. The penetration holes 35 may be replaced by bottomed holes with lower openings.

As shown in FIG. 6, the support part 41 may be included in a separate component 24 from the chassis 23. The separate component, or lens supporting rim part, 24 may include a pair of the support parts 41, and may include a pair of pad arms 43. The pad arms, or butterfly legs, 43 may obliquely extend downward from the base end of the support part 41. The separate component 24 may include a connection part 42. The connection part, or upper piece, 42 may connect between the base ends of the support parts 41. The separate component 24 may include one or more penetration holes 45. The penetration holes 45 may penetrate the connection part 42 in the substantially vertical direction, and may be disposed at a position corresponding to the penetration holes 35. The penetration holes 45 may have a cylindrical shape, and may be threaded on their inner face. The separate component 24 may be fixed to the chassis 23 by screws 25 or other releasable fixture means. The screws 25 may be screwed into the penetration holes 35 and 45.

As shown in FIG. 7, the separate component 24 may have a narrower, or wider, distance between the support parts 41 than that shown in FIG. 6. A plurality of the separate components may be provided with different distances between the support parts 41, and/or with different materials, colors, patterns, shapes or other features. One may be selected from them, and the selected one may be fixed to the chassis 23.

As shown in FIGS. 8 and 9, use of the separate components 24 with different distances between the support parts 41 enables to change a distance between the lens 15. This enables adjustment of the distance between the lens 15 to match a distance between eyes of the user. This also enables handling of various preferrences of the user. The support parts 41 may be deformable as shown with broken lines. This enables fine adjustment of the distance between the lens 15, which can not be achieved only by selection of the separate components 24.

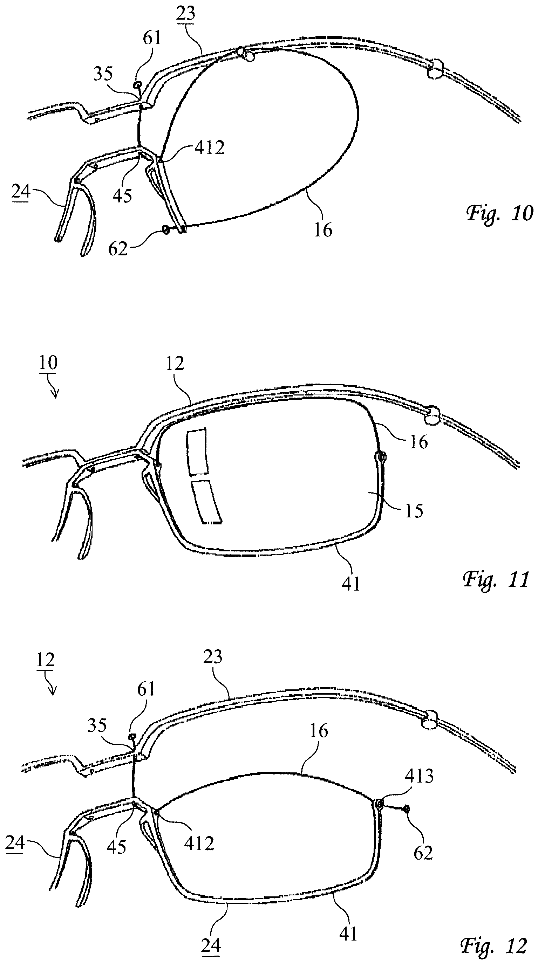

As shown in FIG. 10, the holder thread 16 may be used as the fixture means for fixing the separate component 24 to the chassis 23.

For example, the holder thread 16 is cut to an appropriate length, and the ball 61 is formed at its one end. Next, the other end of the holder thread 16 is inserted downward through the penetration hole 35, and then inserted downward through the penetration hole 45. The holder thread 16 is further inserted through the penetration hole 412 from the opposite face to the contact face 411, and then inserted through the penetration hole 413 from the contact face 411 to the opposite face. After the holder thread 16 is cut again if required, the ball 62 is formed. The holder thread 16 is engaged with the engagement part 33, and the lens 15 is fitted between the support part 41 and the holder thread 16. The sequence of the insertion may be inverted.

Appropriate setting of the length of the holder thread 16 enables to fix, or fasten, the separate component 24 to the chassis 23 as well as to hold the lens 15 when the lens 15 is fitted between the support part 41 and the holder thread 16. This enables reduction of the number of components and manufacturing cost.

As shown in FIG. 11, the support part 41 may further extend along the outer periphery of the lens 15. The support part 41 may further extend laterally, and may more further extend upward. The support part 41 may come into contact with an inner lateral part and a lower part of the peripheral side face of the lens 15, and may further come into contact with a outer lateral part of the peripheral side face. The support part 41 may be deformable. This may enable it to match the peripheral side face of the lens 15.

As shown in FIG. 12, the support part 41 may be included in the separate component 24 from the chassis 23. The separate component 24 may be fixed to the chassis 23 by the holder thread 16, screws, or other releasable fixture means.

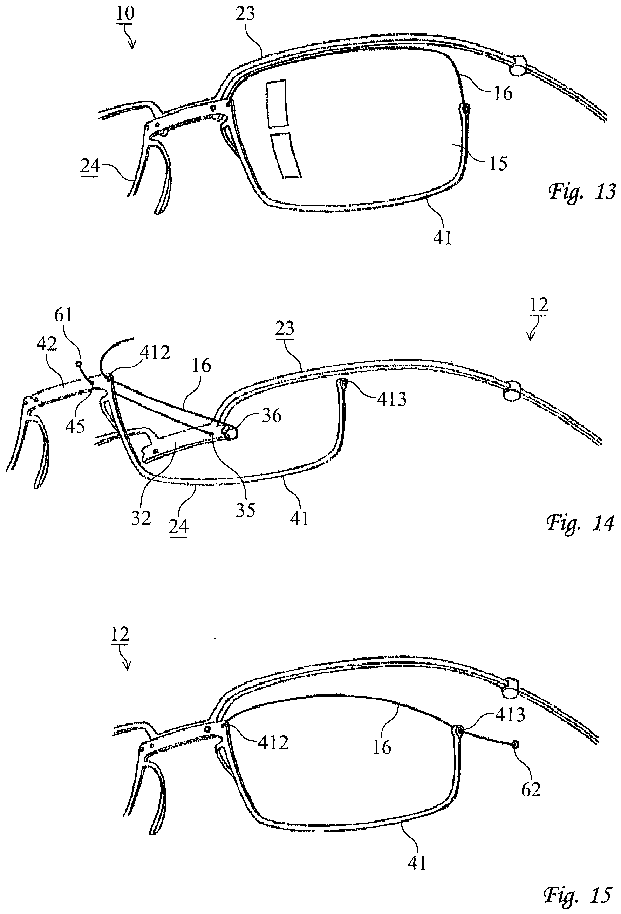

As shown in FIGS. 13 and 14, the separate component 24 may be fixed before the chassis 23, instead of under it. The penetration holes 35 may penetrate the bridge part 32 in a substantially horizontal direction. The chassis 23 may include a notch 36. The notch 36 may be dented from an end face of the bridge part 32, may extend along the anteroposterior direction, and may have a V shape. The penetration hole 45 may penetrate the connection part 42 in the anteroposterior direction. The penetration hole 412 may penetrate the support part 41 in the anteroposterior direction.

For example, the holder thread 16 is cut to an appropriate length, and the ball 61 is formed at its one end. Next, the other end of the holder thread 16 is inserted backward through the penetration hole 45, and then inserted backward through the penetration hole 35. The holder thread 16 runs on an rear face of the bridge part 32, is engaged with the notch 36, and then is inserted forward through the penetration hole 412. Then, the holder thread 16 is inserted through the penetration hole 413 from the contact face 411 to the opposite face, as shown in FIG. 15. After the holder thread 16 is cut again if required, the ball 62 is formed. Finally, the lens 15 is fitted between the support part 41 and the holder thread 16. The sequence of the insertion may be inverted.

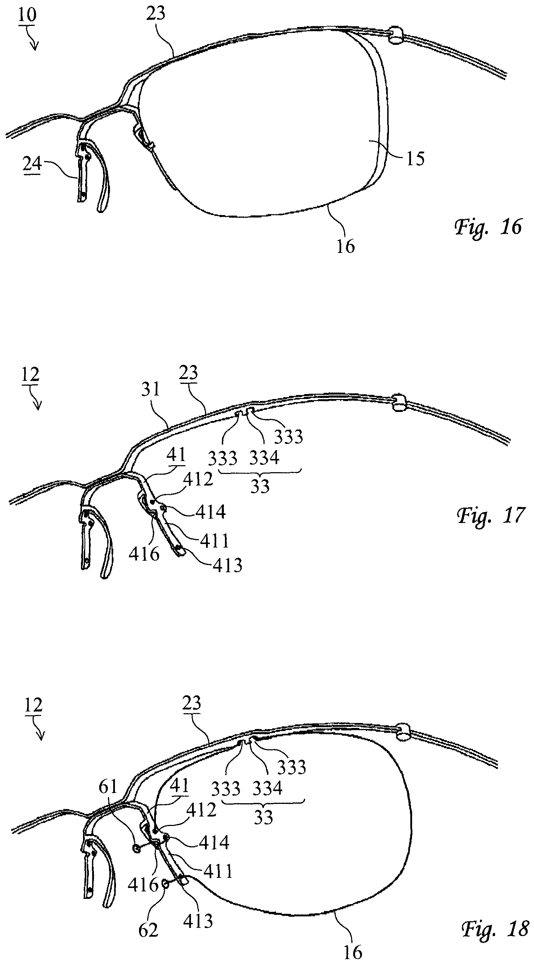

As shown in FIG. 16, the separate component 24 may be fixed to the chassis 23 by brazing or other unreleasable fixture means.

As shown in FIG. 17, the engagement part 33 may inclulde a pair of notches 333. The notches 333 may be dented from a rear face of the brow part 31. The engagement part 33 may include a hook part 334. The hook part 334 may be defined between the notches 333. The notches 333 may be replaced by penetration holes, or guide holes.

The penetration holes 412 may be disposed at a position a bit apart from the base end of the support part 41. The support part 41 may include a further penetration hole 414. The penetration hole 414 may penetrate the support part 41 from the contact face 411 to the opposite face. The penetration hole 414 may be disposed near the penetration hole 412, and may be disposed nearer to the distal end of the support part 41 than the penetration hole 412. The support part 41 may include a groove 416. The groove 416 may be dented from a front face of the support part 41, and may extend laterally. The groove 416 may be disposed near the penetration hole 414.

As shown in FIG. 18, the holder thread 16 may be inserted through the penetration hole 414, and may be engaged with the groove 416.

For example, the holder thread 16 is cut to an appropriate length, and the ball 61 is formed at its one end. Next, the other end of the holder thread 16 is inserted through the penetration hole 35 from the contact face 411 to the opposite face. The holder thread 16 runs over the front face of the support part 41 to engage the groove 416, and then is inserted through the penetration hole 412 from the opposite face to the contact face 411. Then, the holder thread 16 is inserted through the penetration hole 413 from the contact face 411 to the opposite face. After the holder thread 16 is cut again if required, the ball 62 is formed. The holder thread 16 is passed through the notches 334 and hung on the hook part 333 to engage the engagement part 33, and the lens 15 is fitted between the support part 41 and the holder thread 16. The sequence of the insertion may be inverted.

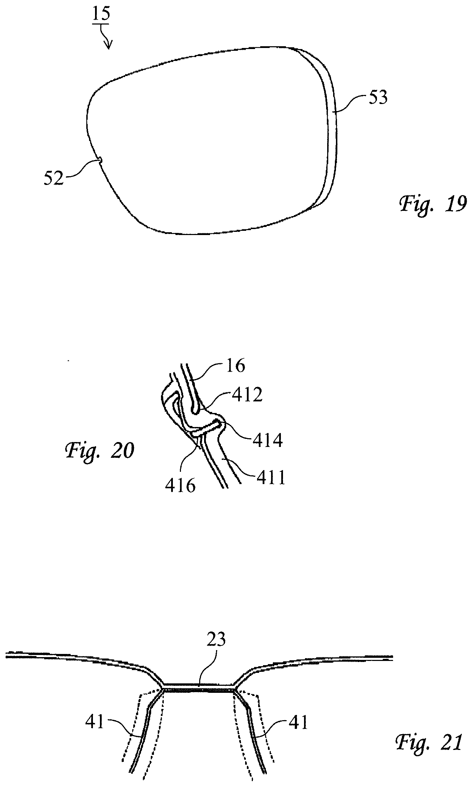

As shown in FIG. 20, the lens 15 may include a lens engagement part 52. The lens engagement part 52 may be a groove, and may extend in the anteroposterior direction. The lens engagement part 52 may be provided at an lateral edge of the lens 15, and may be dented from an lateral part of the peripheral side face of the lens 15. The lens engagement part 52 may be formed prior to assembly of the spectacles 10, or may be formed during the assembly.

As shown in FIG. 20, a part of the holder thread 16 may run on, or cross, the contact face between the penetration hole 414 and the groove 416. Thereby, a protrusion may be formed for engaging the lens 15, and may engage the lens engagement part 52 to prevent displacement, or rotation, of the lens 15.

Another part of the holder thread 16 may run on the contact face 411 beyond the penetration hole 412, and may engage the groove 53.

As shown in FIG. 21, the support part 41 may have a thin plate shape, and may be deformable, as shown with broken lines, to enable adjustment of the distance between the lens 15.

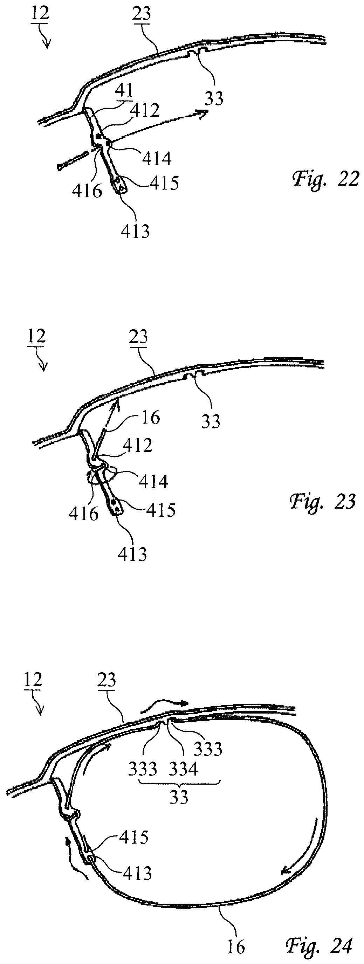

As shown in FIG. 22, the support part 41 may be formed integrally with the chassis 23, and may be formed by bending a part of the chassis 23. A bending position may be changed. This may enable adjustment of the distance between the lens 15.

The support part 41 may include a further penetration hole 415. The penetration hole 415 may penetrate the support part 41 from the contact face 411 to the opposite face. The penetration hole 415 may be disposed near the penetration hole 413, and may be disposed nearer to the base end of the support part 41 than the penetration hole 413.

For example, the holder thread 16 is cut to an appropriate length, and the ball 61 is formed at its one end. Next, the other end of the holder thread 16 is inserted through the penetration hole 35 from the contact face 411 to the opposite face. As shown in FIG. 23, the holder thread 16 runs over the front face of the support part 41 to engage the groove 416, and then is inserted through the penetration hole 412 from the opposite face to the contact face 411. Then, as shown in FIG. 24, the holder thread 16 is inserted through the penetration hole 413 from the contact face 411 to the opposite face, and further inserted throughout the penetration hole 415 from the opposite face to the contact face 411. The holder thread 16 is cut again if required. The holder thread 16 is passed through the notches 334 and hung on the hook part 333 to engage the engagement part 33, and the lens 15 is fitted between the support part 41 and the holder thread 16. The sequence of the insertion may be inverted.

The holder thread 16 may have no ball 62, and may be hold by insertion of the two adjacent penetration halls 413 and 415.

The above described embodiments are examples to make it easier to understand the present invention. The present invention is not limited to the examples, and includes any modified, altered, added, or removed variations, without departing from the scope of the claims attached herewith. This can be easily understood by persons skilled in the art.

### Reference Signs List

10, 100: Spectacles; 12: spectacle frame; 21, 121: temple part; 22, 122: hinge part; 23: chassis; 124: end piece; 31: brow part; 131: half-rim; 32: bridge part; 33: engagement part; 331: cylinder part; 332 and 416: groove; 333 and 36: notch; 334 hook part; 35, 412 to 415, 44 and 45: penetration hole; 24: separate component; 41: support part; 411: contact face; 42: connection part; 43: pad arm; 15 and 115: lens; 51 and 52: lens engagement part; 53: groove; 16 and 116: holder thread; and, 61 and 62: ball.

## Claims

1. A spectacle frame (12), comprising:
an chassis (23); and
a support part (41) for supporting a lens (15), the support part (41) extending downward from the chassis (23),
wherein the support part (41) has:
a first penetration hole (412) penetrating the support part (41), the first penetration hole (412) being provided near a base end of the support part (41), and
a second penetration hole (413) penetrating the support part, the second penetration hole (413) being provided near a distal end of the support part (41), and
wherein a holder thread (16) is to be inserted through the first penetration hole (412) and the second penetration hole (413), engaged in a groove (53) provided around the lens (15) between the first penetration hole (412) and the second penetration hole (413), so as to hold the lens (15) under the chassis (23).

2. The spectacle frame (12) of Claim 1,
wherein the support part (41) is a separate component (24) from the chassis (23), and fixed to the chassis (23).

3. The spectacle frame (12) of Claim 2,
wherein the chassis (23) has a third penetration hole (35) penetrating the chassis (23), and
wherein the holder thread (16) is to be inserted through the third penetration hole (35), so as to fix the support part (41) to the chassis (23).

4. The spectacle frame (12) of any one of Claims 1 to 3,
wherein the support part (41) is deformable to adjust a position of the lens (15).

5. The spectacle frame (12) of any one of Claims 1 to 4,
wherein the chassis (23) has an engagement part (33) for engaging the holder thread (16) to prevent displacement of the lens (15).

6. The spectacle frame (12) of Claim 5,
wherein the engagement part (33) further engages a lens engagement part (51) provided at an upper edge of the lens (15).

7. The spectacle frame (12) of any one of Claims 1 to 6,
wherein the support part (41) further extends at least laterally along a periphery of the lens (15).

8. The spectacle frame (12) of Claim 7,
wherein the support part (41) is deformable to match the periphery of the lens (15).

9. The spectacle frame (12) of any one of Claims 1 to 8,
wherein a part of the holder thread (16) runs on a contact face (411) of the support part (41) to come into contact with the lens (15), and engage a lens engagement part (43) provided at a side edge of the lens (15), so as to prevent displacement of the lens (15).

10. The spectacle frame (12) of any one of Claims 1 to 9,
wherein the chassis (23) has:
a brow part (31) laterally extending and to be located over the lens (15), and
a bridge part (32) laterally extending from an end of the brow part (31), and
wherein the support part (41) extends downward from a vincity of a boundary between the brow part (31) and the bridge part (32).

11. Spectacles (10), comprising:
a spectacle frame (12) of any one of Claims 1 to 10;
the lens (15); and
the holder thread (16).

12. A method for manufacturing spectacles (12), the method comprising:
providing a spectacle frame (12) having:
an chassis (23), and
a support part (41) extending downward from the chassis (23), the support part (41) having:
a first penetration hole (412) penetrating the support part (41), the first penetration hole (412) being provided near a base end ot the support part (41), and
a second penetration hole (413) penetrating the support part (41), the second penetration hole (413) being provided near a distal end ot the support part (41), and
inserting a holder thread (16) through the first penetration hole (412) and the second penetration hole (413), and engaging the holder thread (16) in a groove (53) provided around a lens (15) between the first penetration hole (412) and the second penetration hole (413), so as to hold the lens (15) under the chassis (23).

13. The method of Claim 12,
wherein the support part (41) is a separate component (24) from the chassis (23),
wherein the chassis (23) has a third penetration hole (35) penetrating the chassis (23), and
wherein the method further comprises:
inserting the holder thread (16) through the third penetration hole (35), so as to fix the support part (41) to the chassis (23).

14. The method of Claim 13, further comprising:
selecting one from a plurality of the support parts (41), so as to adjust a position of the lens (15).

15. The method of any one of Claims 12 to 14, further comprising:
deforming the support part (41), so as to adjust a position of the lens (15).
